# EUROPÄISCHE PATENTSCHRIFT

(11) **EP 1 062 716 B1**
(45) Veröffentlichungstag und Bekanntmachung des Hinweises auf die Patenterteilung: **04.10.2006**
(21) Anmeldenummer: 99911695.7
(22) Anmeldetag: 23.02.1999
(51) Int. Cl.: H02J 7/34, H01M 8/04

(54) **SCHALTUNGSANORDNUNG ZUR ELEKTRISCHEN ENERGIEVERSORGUNG EINES NETZES, DAS EINE BRENNSTOFFZELLE SOWIE EINE AKKUMULATORANORDNUNG AUFWEIST**
CIRCUIT ARRANGEMENT FOR SUPPLYING ELECTRIC POWER TO A NETWORK COMPRISING A FUEL CELL AND AN ACCUMULATOR SYSTEM
CIRCUIT POUR ALIMENTER EN ENERGIE ELECTRIQUE UN RESEAU COMPRENANT UNE PILE A COMBUSTIBLE ET UN SYSTEME D'ACCUMULATION

(30) Priorität: 11.03.1998 DE 19810468
(43) Veröffentlichungstag der Anmeldung: 27.12.2000
(73) Patentinhaber: NuCellSys GmbH, 73230 Kirchheim/Teck-Nabern (DE)
(72) Erfinder: FALLER, Peter, D-79843 Löffingen (DE); JANSEN, Axel, D-73272 Neidlingen (DE); SCHELL, Andreas, D-70619 Stuttgart (DE); SONNTAG, Josef, D-89250 Senden (DE)
(74) Vertreter: Finkele, Rolf
(86) Internationale Anmeldenummer: PCT/EP1999/001146
(87) Internationale Veröffentlichungsnummer: WO 1999/046845

(56) Entgegenhaltungen:
- DE-A- 4 431 747
- US-A- 4 775 800
- US-A- 4 839 574
- PATENT ABSTRACTS OF JAPAN vol. 097, no. 010, 31. Oktober 1997 & JP 09 171831 A (SANYO ELECTRIC CO LTD;NIPPON TELEGR & TELEPH CORP <NTT>), 30. Juni 1997

## Beschreibung

Die vorliegende Erfindung betrifft eine Schaltungsanordnung zur elektrischen Energieversorgung eines Netzes, das eine Brennstoffzelle sowie eine Akkumulatoranordnung aufweist nach dem Oberbegriff des Patentanspruches 1.

Es ist bereits eine derartige Schaltungsanordnung bekannt (US-Z : Journal of the Electrochemical Society. Vol. 118, No. 5, Mai 1971, Seiten 812-817 ; K. V. Kordesch : Hydrogen-Air/Lead Battery Hybrid System for Vehicle Propulsion). Danach sind eine Brennstoffzelle und eine Akkumulatoranordnung über eine Diode miteinander verbunden. Aufgrund der Polungsrichtung dieser Diode wird ein Stromfluss von der Akkumulatoranordnung zur Brennstoffzelle verhindert. Dadurch soll das Ausgasen während des Stillstandes der Brennstoffzelle verhindert werden. Zur Erleichterung des Startvorganges soll bei diesem Stand der Technik zum Starten die Spannung der Akkumulatoranordnung an die Brennstoffzelleangelegt werden. Dazu kann die Diode mittels eines Widerstandes kurzgeschlossen werden, wobei dieser Kurzschluss erfolgt, indem ein mit dem Widerstand in Reihe liegender Schalter geschlossen wird. Es fließt dann ein vergleichsweise geringer Strom, der die einzelnen Zellen der Brennstoffzelle in die richtige Polungsrichtung bringt.

Bei einer anderen bekannten Schaltungsanordnung (DE 197 37 406 A1) sind die Brennstoffzelle und die Akkumulatoranordnung dauerhart galvanisch miteinander verbunden, unabhängig vom Betriebszustand der Brennstoffzelle. Insbesondere kann es dabei also zu dem beschriebenen Ausgasen während des Stillstands der Brennstoffzelle kommen. Die Energieversorgung eines Motors sowie ggf. anderer Verbraucher erfolgt dort, indem diese Verbraucher mittels eines DC/DC-Wandlers mit der Brennstoffzelle sowie der Akkumulatoranordnung verbunden sind.

Weiterhin ist eine Schaltungsanordnung bekannt (DE 44 31 747 A1), bei der eine Brennstoffzelle über einen DC/DC-Wandler mit anderen Aggregaten eines Netzes verbunden ist. Eines der anderen Aggregate ist eine Batterie. Um einen Stromfluss von der Batterie über den DC/DC-Wandler zu der Brennstoffzelle zu vermeiden, ist eine Diode vorgesehen, aufgrund deren Polungsrichtung ein solcher Stromfluss verhindert wird.

Die US 4,839,574 offenbart ein Energieerzeugungssystem mit einer Brennstoffzelle, einer Batterie, einer Last und einem zwischen die Brennstoffzelle und die Batterie bzw. die Last geschalteten DC/DC-Wandler zur Anpassung des der Batterie und der Last von der Brennstoffzelle zugeführten Stroms.

Die US 4,775,800 beschreibt eine Energieerzeugungseinrichtung mit einer Brennstoffzelle, einer Batterie, einer Last und einem zwischen die Brennstoffzelle und die Batterie geschalteten Differentialwandler. Der Differentialwandler sorgt dafür, dass die Batterie unabhängig von einer Brennstoffzellenspannung und einer Batteriespannung wahlweise ge- oder entladen werden kann.

In jüngerer Zeit werden Brennstoffzellen als mobile Energieerzeugungssysteme verwendet, wobei zu deren Betrieb ein oder mehrere Hilfsaggregate notwendig sind. Soweit diese Hilfsaggregate elektrisch betrieben werden, werden diese während des Betriebes durch die Brennstoffzelle mit elektrischer Energie versorgt. Üblicherweise wird ein mobiles Energieerzeugungssystem mit Brennstoffzellen wie beispielsweise ein Brennstoffzellenfahrzeug nicht kontinuierlich betrieben. Vielmehr sind auch Betriebspausen vorhanden. Das Energieerzeugungssystem muss also nach einer solchen Betriebspause neu gestartet werden. Da zu diesem Zeitpunkt die Energie zum Antrieb der Hilfsaggregate zu diesem Zeitpunkt noch nicht durch die Brennstoffzelle zur Verfügung gestellt wird, werden pro Hilfsaggregat ein oder mehrere zusätzliche Starteraggregate benötigt, die, falls elektrisch angetrieben, mit elektrischer Energie aus einer Batterie versorgt werden.

Es ist Aufgabe der vorliegenden Erfindung, in einem Brennstoffzellensystem einen Umschaltvorgang zwischen einem Startvorgang und einem Nennbetrieb der Brennstoffzelle zu vereinfachen.

Diese Aufgabe wird erfindungsgemäß durch eine Schaltungsanordnung gemäß dem beigefügten Anspruch 1 gelöst.

Die elektrische Energie wird während des Startvorganges von der Akkumulatoranordnung über wenigstens einen DC/DC-Wandler in das Netz eingespeist. Dadurch kann vorteilhaft die Energieversorgung der Hilfsaggregate bei dem Startvorgang über die Akkumulatoranordnung erfolgen. Es ist nicht mehr notwendig, zusätzliche Starteraggregate vorzusehen, wodurch der Konstruktionsaufwand verringert wird und wodurch auch der Gewichts- und Volumenbedarf des Brennstoffzellensystems verringert wird, was besonders im mobilen Anwendungsbereich von Vorteil ist. Die Hilfsaggregate werden zu Beginn des Startvorganges über die Akkumulatoranordnung in Betrieb gesetzt. Mittels des bzw. der DC/DC-Wandler können ein oder mehrere Starteraggregate ersetzt werden.

Bei der Schaltungsanordnung ist während des Betriebes der Brennstoffzelle (Nennbetrieb) der DC/DC-Wandler so geschaltet dass die Akkumulatoranordnung aus dem Netz mit elektrischer Energieversorgt wird.

Es handelt sich also hier um einen bidirektionalen DC/DC-Wandler. Vorteilhaft kann der ohnehin zur Ladung der Akkumulatoranordnung benötigte Bordlader zur Ladung der Akkumulatoranordnung ersetzt werden. Gleiche Bauteile wie Transformatoren, Power-MOSFET's, Kondensatoren usw. können vorteilhaft sowohl für die Ladung der Akkumulatoranordnung als auch für den Startvorgang verwendet werden. Während des Nennbetriebes der Brennstoffzelle wird also die Akkumulatoranordnung über den wenigstens einen DC/DC-Wandler wieder aufgeladen.

Bei einer bevorzugten Schaltungsanordnung unterscheidet der DC/DC-Wandler automatisch den Nennbetrieb vom Startbetrieb und schaltet entsprechend um. Dadurch wird der Betrieb der Brennstoffzelle vereinfacht, indem sich der DC/DC-Wandler selbsttätig in den richtigen Zustand einstellt.

Bei einer alternativen Schaltungsanordnung ist der DC/DC-Wandler mittels eines externen Signals zwischen Startbetrieb und Nennbetrieb umschaltbar,

Dieses externe Signal wird von einem Steuergerät ausgegeben. Wenn ein Startvorgang stattfindet, kann der DC-Wandler entsprechend so geschaltet werden, dass elektrische Energie über den DC/DC-Wandler von der Akkumulatoranordnung in das Netz eingespeist wird. Im Nennbetrieb der Brennstoffzelle kann der DC/DC-Wandler entsprechend so angesteuert werden, dass elektrische Energie aus dem Netz zu der Akkumulatoranordnung übertragen wird, wodurch die Akkumulatoranordnung aufgeladen wird.

Bei einer weiteren bevorzugten Schaltungsanordnung liefert der DC/DC-Wandler ein Signal, wenn er für den Start- bzw. Nennbetrieb bereit ist. Dadurch kann der Startvorgang vorteilhaft im richtigen Zeitpunkt beginnen.

Bei noch einer weiteren bevorzugten Schaltungsanordnung lädt der DC/DC-Wandler beim Hochlaufen die Zwischenkreistransformatoren der Hilfsaggregate. Dadurch wird vorteilhaft eine separate Vorladeschaltung eingespart.
Ein Ausführungsbeispiel der Erfindung ist in der Zeichnung näherdargestellt. Es zeigt dabei :
- Fig. 1 :: ein Blockschaltbild der erfindungsgemäß eingesetzten Bauteile,
- Fig. 2 :: ein Ablaufdiagramm, das die Schaltstellung und entsprechende Umschaltung eines bidirektionalen DC/DC-Wandlers zeigt und
- Fig. 3 :: ein Energieerzeugungssystem eines Brennstoffzellenfahrzeuges.

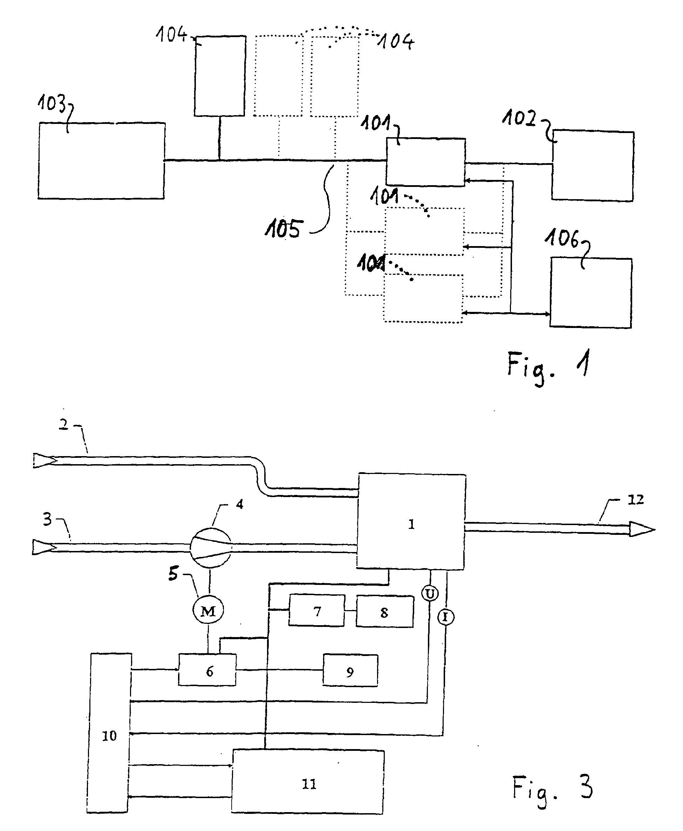

Wie in Figur 1 gezeigt, wird über einen oder mehrere zusätzliche DC/DC-Wandler 101 eine Akkumulatoranordnung 102 an das Brennstoffzellen-DC-Netz 105 angeschlossen. Hierdurch steht schon zu Beginn eines Startvorganges die für den Antrieb der Hilfsaggregate notwendige elektrische Energie zur Verfügung. Zusätzliche Starteraggregate können entfallen. Im Anschluss an den Startvorgang, also im sogenannten Nennbetrieb, wird die Akkumulatoranordnung 102 über den DC/DC-Wandler 101 von der Brennstoffzelle 103 mitelektrischer Energie versorgt, also aufgeladen. Der DC/DC-Wandler 101 ist für beide Wandlungsrichtungen (bidirektional) ausgelegt. Es kann dann die Energieübertragung sowohl von dem Netz 105 zu der Akkumulatoranordnung 102 erfolgen, wobei dann die Akkumulatoranordnung 102 im Nennbetrieb der Brennstoffzelle 103 aufgeladen wird, oder es kann die Energieübertragung von der Akkumulatoranordnung 102 zu dem Netz 105 erfolgen, wodurch bei einem Startvorgang die Energieversorgung gewährleistet wird. Es ist eine Ausgestaltung möglich, bei der der DC/DC-Wandler 101 den Startvorgang vom Nennbetrieb unterscheiden kann. Dies kann beispielsweise durch die vorliegenden Spannungsverhältnisse erfolgen. Der DC/DC-Wandler 101 kann dann entsprechend der momentanen Anforderung umschalten. Vorteilhaft liefert der DC/DC-Wandler 101 ein Signal, wenn der

Umschaltvorgang beendet ist und der DC/DC-Wandler 101 für den Startvorgang bzw. den Nennbetrieb bereit ist. Die Umschaltung des DC/DC-Wandlers 101 wird über ein Steuergerät 106 abgewickelt, das ein Signal zur Umschaltung des DC/DC-Wandler 101 abgeben kann, wenn dieser das Erfordernis des Umschaltvorganges nicht selbst erkennt, und dem das Bereitschaftssignal des DC/DC-Wandlers 101 zugeführt wird, wenn der Umschaltvorgang abgeschlossen ist. Weiterhin sind in Figur 1 Hilfsaggregate 104 zu sehen. Diese Hilfsaggregate können beispielsweise ein Kompressor zu Förderung des Brennmittels und/oder des Oxydanten sein.

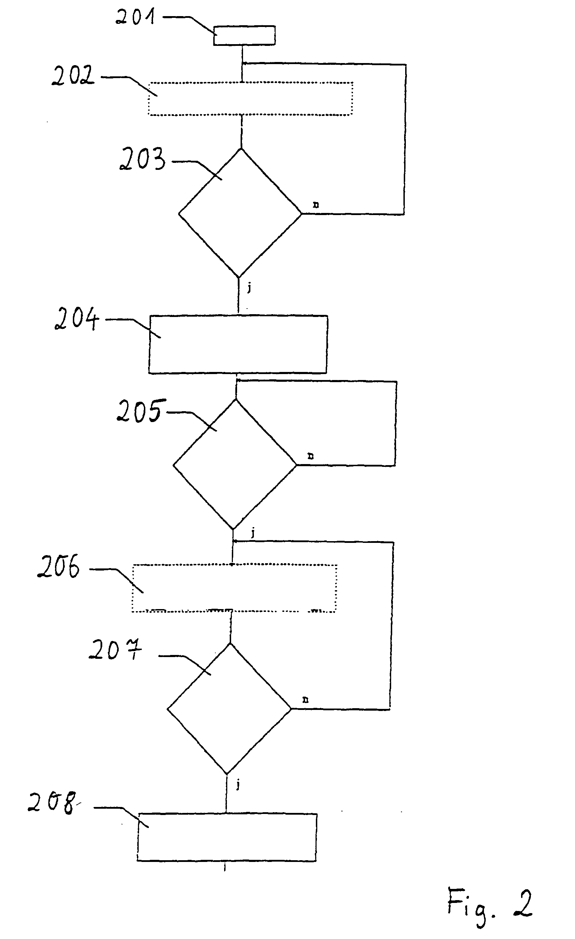

Figur 2 zeigt ein Ablaufdiagramm, das die Schaltstellung und entsprechende Umschaltung eines bidirektionalen DC/DC-Wandlers 101 darstellt. Zu Beginn eines Startvorganges (Schritt 201) wird entweder durch ein externes Signal eines Steuergerätes oder aber durch ein Erkennen des Startvorganges durch den DC/DC-Wandler 101 in dem Schritt 202 der DC/DC-Wandler in den Startmodus geschaltet.

In dem Schritt 203 wird überprüft, ob der DC/DC-Wandler 101 im Startmodus ist. Ist dies der Fall, erfolgt ein Übergang zu dem Schritt 204, in dem die Ausgangsspannung des DC/DC-Wandler 101 hochläuft. Dadurch werden dessen interne Kondensatoren und die Zwischenkreiskondensatoren der Hilfsaggregate geladen. Dadurch können vorteilhaft Vorladeschaltungen für die Hilfsaggregate entfallen. Wenn der DC/DC-Wandler zum Abschluß eine bestimmte Ausgangsspannung erreicht hat, liefert der DC/DC-Wandler ein Bereitschaftssignal für den Startmodus. Dieses Bereitschaftssignal kann beispielsweise einem Steuergerät zugeführt werden.

Es erfolgt dann ein Startvorgang, bei dem die Hilfsaggregate durch das Steuergerät gestartet werden. Weiterhin wird die Brennstoffzelle in Betrieb genommen.

In dem Schritt 205 wird überprüft, ob die Brennstoffzellenspannung U_{BZ} die DC/DC-Wandler Ausgangsspannung U_{DC} überschreitet.

Ist dies der Fall, schaltet der DC/DC-Wandler vorteilhaft entsprechend dem Schritt 206 vom Startmodus in den Lademodus um. Die Erkennung der Spannungsverhältnisse kann direkt durch den DC/DC-Wandler erfolgen. Es ist auch möglich, von dem Steuergerät ein Signal an den DC/DC-Wandler auszugeben, um dessen Umschaltung zu bewirken.

In dem Schritt 207 wird überprüft, ob sich der DC/DC-Wandier im Lademodus befindet. d.h. ob er das entsprechende Bereitschaftssignal ausgegeben hat.

Entsprechend dem Schritt 208 befindet sich die Brennstoffzelle dann im Nennbetrieb.

Vorteilhaft liefert der DC/DC-Wandler zusätzlich ein Temperatursignal, das ein digitales Übertemperatursignal oder ein analoges Temperatursignal sein kann.

Figur 3 zeigt eine schematische Darstellung eines Energieerzeugungssystems eines Brennstoffzellenfahrzeuges.

Einer Brennstoffzelle 1 wird über eine erste Zuleitung 2 ein Brennmittel, beispielsweise Wasserstoff oder Methanol, zugeführt. Über eine zweite Zuleitung 3, in der ein Kompressor 4 angeordnet ist, wird der Brennstoffzelle 1 außerdem ein Oxydant, beispielsweise Umgebungsluft, zugeführt. In der Brennstoffzelle 1 wird der Brennstoff an der Anode oxidiert, das Oxydant wird an der Kathode reduziert. Bei dieser elektrochemischen Reaktion entsteht zwischen den beiden Elektroden eine Spannung. Durch Parallel- beziehungsweise Hintereinanderschaltung vieler solcher Zellen zu einem sogenannten Stack können Spannungen und Stromstärken erreicht werden, die zum Antrieb eines Fahrzeuges ausreichen.

Das Abführen der Luft aus der Brennstoffzelle 1 erfolgt über eine Abströmleitung 12. Zum Antrieb des Fahrzeuges ist eine Antriebseinheit 11 vorgesehen. Das Steuergerät 10 erhält über elektrische Leitungen Informationen über den Oxydant-Massenstrom dm/dt, den Betriebszustand der Antriebseinheit 11 sowie über die von der Brennstoffzelle 1 erzeugte Spannung U und den entsprechenden Strom I.

Zum Antrieb des Kompressors 4 ist ein Elektromotor 5 vorgesehen, der über einen Umrichter mit elektrischer Energie versorgt wird. Der Umrichter 6 wird durch das Steuergerät 10 angesteuert, wodurch die Drehzahl n des Elektromotors 5 und damit des Kompressors 4 eingestellt wird. Über die Drehzahl n des Kompressors 4 kann der Oxydant-Massenstrom dm/dt und damit die Leistung P_{BZ} der Brennstoffzelle 1 beeinflußt werden. Die neben dem Kompressor 4 weiteren, zum Betrieb der Brennstoffzelle 1 notwendigen Hilfsaggregate 9 werden ebenfalls über den Umrichter 6 oder über eigene Umrichter mit elektrischer Energie versorgt.

Die elektrische Energie wird während des Leerlauf- und Fahrbetriebes des Brennstoffzellensystemes eben durch diese Brennstoffzelle 1 zur Verfügung gestellt, das heißt, das Brennstoffzellensystem versorgt sich selbst mit der nötigen Hilfsenergie.

Zu Beginn des Startvorganges wird diese notwendige Hilfsenergie durch das Brennstoffzellensystem allerdings noch nicht zur Verfügung gestellt. Aus diesem Grund wird die Starterbatterie 8 eingesetzt, die während des Startvorganges über den DC/DC-Wandler 7 und den Umrichter 6 den Elektromotor 5 und die weiteren Hilfsaggregate 9 mit der nötigen Hilfsenergie versorgt. Der DC/DC-Wandler 7 ist notwendig, um das Spannungsniveau der Starterbatterie 8 an das Spannungsniveau der Brennstoffzelle 1 anzugleichen.

In dem an den Startvorgang anschließenden Nennbetrieb des Brennstoffzellensystemes wird die Starterbatterie 8 über den DC/DC-Wandler 7 aus der Brennstoffzelle 1 mit elektrischer Energie versorgt, also aufgeladen. Hierzu wird die Spannung der Brennstoffzelle 1 wiederum im DC/DC-Wandler 7 an das Spannungsniveau der Starterbatterie 8 angeglichen.

## Patentansprüche

1. Schaltungsanordnung zur elektrischen Energieversorgung eines Netzes (105), das eine Brennstoffzelle (103; 1) sowie eine Akkumulatoranordnung (102; 8) aufweist, wobei die Akkumulatoranordnung (102; 8) dazu eingerichtet ist, während eines Startvorgangs der Brennstoffzelle (103; 1) elektrische Energie an eine Last (104; 9, 11) zu liefern und während eines Nennbetriebs der Brennstoffzelle (103; 1) durch Zufuhr elektrischer Energie von der Brennstoffzelle (103; 1) geladen zu werden, und wobei die Akkumulatoranordnung (102; 8) über einen bidirektionalen DC/DC-Wandler (101; 7) sowohl mit der Brennstoffzelle (102; 8) als auch mit der Last (104; 9, 11) verbunden ist,
**dadurch gekennzeichnet, dass** die Akkumulatoranordnung (102; 8) zumindest während der Phasen, in denen kein Startvorgang stattfindet und in denen kein Nennbetrieb der Bennstoffzelle (103; 1) vorliegt, von der Brennstoffzelle (102; 1) trennbar ist, und dass eine Vorrichtung vorhanden ist, die dazu eingerichtet ist, den Startvorgang der Brennstoffzelle (103; 1) vom Nennbetrieb der Brennstoffzelle (103; 1) zu unterscheiden und eine entsprechende Umschaltung des DC/DC-Wandlers (101; 7) von einem Startmodus während des Startvorgangs der Brennstoffzelle (103; 1) in einen Lademodus während des Nennbetriebs der Brennstoffzelle (103; 1) zu bewirken, wenn eine Brennstoffzellenspannung eine Ausgangsspannung des DC/DC-Wandlers (101; 7) im Startmodus überschreitet.

2. Schaltungsanordnung nach Anspruch 1,
**dadurch gekennzeichnet, dass** die Vorrichtung, die dazu eingerichtet ist, den Startvorgang der Brennstoffzelle (103; 1) vom Nennbetrieb der Brennstoffzelle (103; 1) zu unterscheiden und eine entsprechende Umschaltung des DC/DC-Wandlers (101; 7) von einem Startmodus während des Startvorgangs der Brennstoffzelle (103; 1) in einen Lademodus während des Nennbetriebs der Brennstoffzelle (103; 1) zu bewirken, integriert mit dem DC/DC-Wandler (101; 7) ausgebildet ist.

3. Schaltungsanordnung nach Anspruch 1,
**dadurch gekennzeichnet, dass** die Vorrichtung, die dazu eingerichtet ist, den Startvorgang der Brennstoffzelle (103; 1) vom Nennbetrieb der Brennstoffzelle (103; 1) zu unterscheiden und eine entsprechende Umschaltung des DC/DC-Wandlers (101; 7) von einem Startmodus während des Startvorgangs der Brennstoffzelle (103; 1) in einen Lademodus während des Nennbetriebs der Brennstoffzelle (103; 1) zu bewirken, durch eine Steuereinrichtung gebildet ist, die dazu eingerichtet ist, ein Signal zur Umschaltung des DC/DC-Wandlers (101; 7) an den DC/DC-Wandler (101; 7) auszugeben.

4. Schaltungsanordnung nach einem der Ansprüche 1 bis 3,
**dadurch gekennzeichnet, dass** der DC/DC-Wandler (101; 7) dazu eingerichtet ist, ein Signal zu liefern, wenn er für den Startmodus bzw. den Lademodus bereit ist.

5. Schaltungsanordnung nach einem der Ansprüche 1 bis 4,
**dadurch gekennzeichnet, dass** der DC/DC-Wandler (101; 7) dazu eingerichtet ist, beim Hochlaufen Zwischenkreiskondensatoren von Hilfsaggregaten (104; 4) zu laden.

## Claims

1. Circuit arrangement for supplying electrical energy to a power supply (105) which has a fuel cell (103; 1) and also an accumulator arrangement (102; 8), where the accumulator arrangement (102; 8) is set up to deliver electrical energy to a load (104; 9, 11) during a starting procedure for the fuel cell (103; 1) and, during rated operation of the fuel cell (103; 1), to be charged through the supply of electrical energy from the fuel cell (103; 1), and where the accumulator arrangement (102; 8) is connected both to the fuel cell (102; 8) and to the load (104; 9, 11) via a bidirectional DC/DC converter (101; 7),
**characterized in that** the accumulator arrangement (102; 8) can be isolated from the fuel cell (102; 1) at least during the phases in which no starting procedure is carried out and in which the fuel cell (103; 1) is not in rated operation, and **in that** an apparatus is provided which is set up to distinguish the starting procedure for the fuel cell (103; 1) from rated operation of the fuel cell (103; 1) and to prompt a corresponding changeover of the DC/DC converter (101; 7) from a starting mode during the starting procedure for the fuel cell (103; 1) to a charging mode during rated operation of the fuel cell (103; 1) if a fuel cell voltage exceeds an output voltage from the DC/DC converter (101; 7) in the starting mode.

2. Circuit arrangement according to Claim 1,
**characterized in that** the apparatus which is set up to distinguish the starting procedure for the fuel cell (103; 1) from rated operation of the fuel cell (103; 1) and to prompt a corresponding changeover of the DC/DC converter (101; 7) from a starting mode during the starting procedure for the fuel cell (103; 1) to a charging mode during rated operation of the fuel cell (103; 1) is in a form integrated with the DC/DC converter (101; 7).

3. Circuit arrangement according to Claim 1,
**characterized in that** the apparatus which is set up to distinguish the starting procedure for the fuel cell (103; 1) from rated operation of the fuel cell (103; 1) and to prompt a corresponding changeover of the DC/DC converter (101; 7) from a starting mode during the starting procedure for the fuel cell (103; 1) to a charging mode during rated operation of the fuel cell (103; 1) is formed by a control device which is set up to output a signal for changing over the DC/DC converter (101; 7) to the DC/DC converter (101; 7).

4. Circuit arrangement according to one of Claims 1 to 3,
**characterized in that** the DC/DC converter (101; 7) is set up to deliver a signal when it is ready for the starting mode or the charging mode.

5. Circuit arrangement according to one of Claims 1 to 4,
**characterized in that** the DC/DC converter (101; 7) is set up to charge intermediate-circuit capacitors in auxiliary units (104; 4) during start-up.

## Revendications

1. Arrangement de circuit pour l'alimentation en énergie électrique d'un réseau (105), lequel présente une pile à combustible (1.03 ; 1) ainsi qu'un arrangement d'accumulateur (102 ; 8), l'arrangement d'accumulateur (102 ; 8) étant conçu pour délivrer de l'énergie électrique à une charge (104 ; 9, 11) pendant une opération de démarrage de la pile à combustible (103 ; 1) et pour être chargé pendant un fonctionnement nominal de la pile à combustible (103 ; 1) par acheminement d'énergie électrique depuis la pile à combustible (103 ; 1), et l'arrangement d'accumulateur (102 ; 8) étant relié par le biais d'un convertisseur CC/CC bidirectionnel (101 ; 7) à la fois avec la pile à combustible (103 ; 1) et avec la charge (104 ; 9, 11), **caractérisé en ce que** l'arrangement d'accumulateur (102 ; 8) peut être déconnecté de la pile à combustible (102 ; 1) au moins pendant les phases pendant lesquelles il n'y a pas d'opération de démarrage et dans lesquelles il n'y a pas de fonctionnement nominal de la pile à combustible (103 ; 1), et qu'il existe un dispositif qui est conçu pour différencier l'opération de démarrage de la pile à combustible (103 ; 1) du fonctionnement nominal de la pile à combustible (103 ; 1) et réaliser un basculement en conséquence du convertisseur CC/CC (101 ; 7) d'un mode de démarrage pendant l'opération de démarrage de la pile à combustible (103 ; 1) en un mode de charge pendant le fonctionnement nominal de la pile à combustible (103 ; 1) lorsqu'une tension de pile à combustible dépasse une tension de sortie du convertisseur CC/CC (101 ; 7) en mode de démarrage.

2. Arrangement de circuit selon la revendication 1, **caractérisé en ce que** le dispositif qui est conçu pour différencier l'opération de démarrage de la pile à combustible (103 ; 1) du fonctionnement nominal de la pile à combustible (103 ; 1) et réaliser un basculement en conséquence du convertisseur CC/CC (101 ; 7) d'un mode de démarrage pendant l'opération de démarrage de la pile à combustible (103 ; 1) en un mode de charge pendant le fonctionnement nominal de la pile à combustible (103 ; 1) est intégré avec le convertisseur CC/CC (101 ; 7).

3. Arrangement de circuit selon la revendication 1, **caractérisé en ce que** le dispositif qui est conçu pour différencier l'opération de démarrage de la pile à combustible (103 ; 1) du fonctionnement nominal de la pile à combustible (103 ; 1) et réaliser un basculement en conséquence du convertisseur CC/CC (101 ; 7) d'un mode de démarrage pendant l'opération de démarrage de la pile à combustible (103 ; 1) en un mode de charge pendant le fonctionnement nominal de la pile à combustible (103 ; 1) est formé par un dispositif de commande qui est conçu pour délivrer un signal de basculement du convertisseur CC/CC (101 ; 7) au convertisseur CC/CC (101 ; 7).

4. Arrangement de circuit selon l'une des revendications 1 à 3, **caractérisé en ce que** le convertisseur CC/CC (101 ; 7) est conçu pour délivrer un signal lorsqu'il est prêt pour le mode de démarrage ou le mode de charge.

5. Arrangement de circuit selon l'une des revendications 1 à 4, **caractérisé en ce que** le convertisseur CC/CC (101 ; 7) est conçu pour, lors du démarrage, charger des condensateurs de circuit intermédiaire de groupes auxiliaires (104 ; 4).
